# EUROPÄISCHE PATENTSCHRIFT

(11) **EP 1 731 983 B1**
(45) Veröffentlichungstag und Bekanntmachung des Hinweises auf die Patenterteilung: **16.09.2009**
(21) Anmeldenummer: 06114084.4
(22) Anmeldetag: 17.05.2006
(51) Int. Cl.: G05D 1/02, A01D 75/18, A01D 43/08, A01D 43/073

(54) **Landwirtschaftliche Arbeitsmaschine mit einer Austrageinrichtung und einem Kollisionssensor**
Agricultural work machine comprising a discharging device and a collision sensor
Machine de travail agricole pourvue d'un dispositif de déversement et d'un capteur de collision

(30) Priorität: 02.06.2005 DE 102005025318
(43) Veröffentlichungstag der Anmeldung: 13.12.2006
(73) Patentinhaber: Deere & Company, Moline, IL 61265-8098 (US)
(72) Erfinder: Clauss, Dr., Steffen, 66509 Rieschweiler-Mühlbach (DE); Theobald, Jens, 66904 Brücken (DE); Hettiger, Marcus, 66115 Saarbrücken (DE)
(74) Vertreter: Holst, Sönke

(56) Entgegenhaltungen:
- DE-A1- 3 638 076
- DE-A1- 19 800 524
- DE-A1- 19 958 341
- GB-A- 1 195 688

## Beschreibung

Die Erfindung betrifft eine selbstfahrende landwirtschaftliche Arbeitsmaschine mit einer Austrageinrichtung zum Austragen landwirtschaftlicher Produkte nach dem Oberbegriff des Anspruchs 1.

### Stand der Technik

Bei Erntemaschinen mit um die Hochachse drehbaren Austrageinrichtungen zum Überladen des Ernteguts von der Erntemaschine auf ein Transportfahrzeug, wie Mähdreschern mit Abtankrohren und Feldhäckslern mit Auswurfkrümmern, besteht die Gefahr, dass die Austrageinrichtung beschädigt wird, wenn sie gegen ein Hindernis stößt, wie gegen einen am Feldrand stehenden Baum, einen Leitungsmast oder ein nebenher fahrendes Transportfahrzeug.

In der EP 0 492 195 A wird vorgeschlagen, dass die Antriebseinrichtung des Auswurfkrümmers eines Feldhäckslers bei übermäßigen Drehkräften auf den Auswurfkrümmer durch Außereingriffbringen vom Drehkranz und einer ihn antreibenden Schnecke selbsttätig entkuppelbar ist. Dadurch kann der Auswurfkrümmer frei rotieren und einem Hindernis ausweichen. Die Schnecke wird in der entkuppelten Stellung durch eine Sperrklinke arretiert. Ein Bediener muss deshalb die Sperrklinke wieder lösen, nachdem die Störung beseitigt ist. Er muss aus der Kabine heraussteigen, an einer nur schwer zugänglichen Stelle die Sperrklinke lösen und kann erst dann mit dem Betrieb fortfahren. Auch ist die freie Verdrehmöglichkeit des Auswurfkrümmers nach dem Entkuppeln der Schnecke nicht unproblematisch, weil er dann nach dem ersten Aufprall auf ein Hindernis zurückfedern und gegen ein anderes Hindernis schlagen kann und dabei beschädigt wird.

Die EP 0 672 339 A schlägt vor, in den Antriebsstrang des Auswurfkrümmers eines Feldhäckslers einen Scherbolzen einzufügen, der bei außergewöhnlicher Belastung des Auswurfkrümmers abschert. Hier muss nach Beendigung der übermäßigen Belastung der Scherbolzen erneuert werden, was an dieser nicht ganz einfach zugänglichen Stelle nur unter relativ hohem Zeitaufwand möglich ist. Steht kein Bolzen zur Verfügung, ist der Feldhäcksler für längere Zeit nicht nutzbar. Weiterhin sind auch die oben bemängelten Nachteile der freien Verdrehmöglichkeit gegeben.

Die EP 1 092 342 A offenbart einen Feldhäcksler, dessen Auswurfkrümmer durch einen Hydraulikmotor bewegbar ist. Zwischen der Zulaufleitung und/oder Rücklaufleitung des Hydraulikmotors und der Leckölleitung sind ein Druckbegrenzungsventil und ein Nachsaugventil angeordnet. Dadurch erreicht man, dass der Hydraulikmotor im Kollisionsfall als Pumpe wirkt und den Auswurfkrümmer mit definierter Kraft bremst. Wird er beim Aufprall gerade zum Verstellen des Auswurfkrümmers angetrieben, wird der ihn antreibende Ölfluss durch dass Druckbegrenzungsventil abgeleitet. Als nachteilig ist anzusehen, dass der Hydraulikmotor aufgrund der Übersetzung des zwischengeschalteten Getriebes zum Antrieb des Auswurfkrümmers eine relativ große Bremswirkung hat, so dass Beschädigungen des Auswurfkrümmers denkbar bleiben. Auch ist diese Lösung wegen der notwendigen Hydraulikelemente relativ aufwändig und teuer.

In der DE 100 21 660 A wird ein Feldhäcksler beschrieben, bei dem zwischen einem mit dem Auswurfkrümmer mitdrehenden Zahnkranz und dem Auswurfkrümmer eine Überlastkupplung angebracht ist, die einen federbelasteten Rastvorsprung umfasst, der in Rastausnehmungen des Zahnkranzes eingreift.

Die DE 101 41 702 A schlägt vor, bei einem Feldhäcksler im Antriebsstrang zwischen dem zum Rotieren des Auswurfkrümmers um die Hochachse dienenden Motor und dem Auswurfkrümmer eine Überlastkupplung einzufügen, die ein definiertes Bremsmoment bereitstellt und die Antriebsverbindung nach dem Ende der Überlastung selbsttätig wieder herstellt.

Die in der DE 100 21 660 A und DE 101 41 702 A beschriebenen Überlastkupplungen vermeiden zwar das freie Drehen der Austrageinrichtung im Kollisionsfall, jedoch werden sie erst dann wirksam, wenn die Austrageinrichtung bereits gegen ein Hindernis geprallt ist. Bei höheren Geschwindigkeiten sind Beschädigungen demnach nicht immer zu vermeiden. Ähnliche, mechanische Überlastkupplungen werden als so genannter Anfahrschutz auch an Düngerstreuern (DE 35 12 992 C) oder Mähgeräten (EP 0 807 376 A) sowie Auslegern von Sprühgeräten (US 6 889 915 B) verwendet.

Es wurde auch vorgeschlagen, Mähgeräte (DE 37 44 821 C, GB 1 195 688 A und DE 36 38 076 A) oder Schneidwerke für Mähdrescher (DE 199 58 341 A) mit Tastvorrichtungen oder Fühlern auszustatten. Stoßen die Fühler gegen ein vor dem Mähgerät bzw. Schneidwerk liegendes Hindernis, wird das Mähgerät bzw. Schneidwerk selbsttätig nach hinten verschwenkt oder angehoben. Die DE 198 00 524 A beschreibt ein Mähwerk mit einem Mikrowellensensor zur Erfassung von Hindernissen, der mit einer Schaltung zur selbsttätigen Anhebung des Mähwerks im Falle der Erkennung eines Hindernisses durch den Mikrowellensensor verbunden ist.

Die als gattungsbildend angesehene DE 44 26 059 C beschreibt einen Feldhäcksler mit einer Kamera, die das Ende des Auswurfkrümmers und den Laderaum eines Transportwagens erfasst, in den der Auswurfkrümmer das Erntegut übergibt. Ein mit der Kamera verbundenes Bildverarbeitungssystem erkennt selbsttätig die Wände des Transportwagens und steuert Aktoren zur Verstellung der Position und Auswurfrichtung des Auswurfkrümmers derart an, dass das Erntegut nur innerhalb der Wände abgelegt wird. Die Kamera ist nicht in der Lage, eventuelle Hindernisse zu erkennen, gegen die der Auswurfkrümmer stoßen kann, da sie etwa von der Mitte des Auswurfkrümmers aus in den Laderaum blickt.

### Problem

Das der Erfindung zu Grunde liegende Problem wird darin gesehen, eine Einrichtung bereitzustellen, die es erlaubt, bei einer drohenden Kollision zwischen einer Austrageinrichtung und einem Hindernis eine Beschädigung der Austrageinrichtung zu vermeiden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, der Austrageinrichtung einer landwirtschaftlichen Erntemaschine, die zum Überladen geernteten Materials auf Transportfahrzeuge dient, einen vorausschauenden Kollisionssensor zuzuordnen, der sich zur Erkennung eventueller Hindernisse eignet, die sich in der Fahrtrichtung der Arbeitsmaschine vor der Austrageinrichtung befinden. Der Kollisionssensor ist mit einer Steuerung verbunden, die bei Erhalt eines auf eine drohende Kollision hinweisenden Signals des Kollisionssensors eine Notbremsung der Arbeitsmaschine veranlasst und/oder einen Antrieb zur Verstellung der Position der Austrageinrichtung veranlasst, die Austrageinrichtung um die Hochachse insbesondere entgegen der Fahrtrichtung nach hinten vom Hindernis hinweg zu drehen. Es ist auch möglich, bei einer drohenden Kollision die Austrageinrichtung von ihrem Antrieb, der zur Veränderung ihres Drehwinkels um die Hochachse dient, zu trennen. Die somit freigeschaltete Austrageinrichtung kann sich frei drehen und beim Anstoß an das Hindernis relativ leicht ausweichen. Der Kollisionssensor arbeitet berührungslos mit einer Kamera, die mit einem Bildverarbeitungssystem verbunden ist. Das Bildverarbeitungssystem ist in der Lage, Hindernisse selbsttätig zu erkennen. Bei einer anderen Ausführungsform dient ein auf einer Laufzeitmessung basierender Laserentfernungssensor, der vorzugsweise an der Austrageinrichtung befestigt ist, zur Erkennung möglicher Hindernisse. Der Entfernungssensor kann einen hinreichenden Raumwinkel kontinuierlich überwachen, oder es findet eine abtastende Ausführungsform Verwendung, die fortlaufend einen hinreichenden Raumwinkelbereich abtastet.

Die Erfindung eignet sich insbesondere für das Abtankrohr von Mähdreschern und den Auswurfkrümmer von Feldhäckslern.

### Ausführungsbeispiel

In den Zeichnungen ist ein nachfolgend näher beschriebenes Ausführungsbeispiel der Erfindung dargestellt. Es zeigt:
- Fig. 1: eine Arbeitsmaschine in Seitenansicht und in schematischer Darstellung,
- Fig. 2: eine Draufsicht auf die Arbeitsmaschine und ein Transportfahrzeug beim Erntevorgang, wobei die Austrageinrichtung der Arbeitsmaschine mit einer ersten, aufgrund des fehlenden Drehtellers nicht unter den Umfang des Anspruchs 1 fallenden Ausführungsform eines Kollisionssensors ausgestattet ist,
- Fig. 3: die Draufsicht aus Figur 2, wobei die Austrageinrichtung der Arbeitsmaschine mit einer zweiten Ausführungsform eines Kollisionssensors ausgestattet ist.

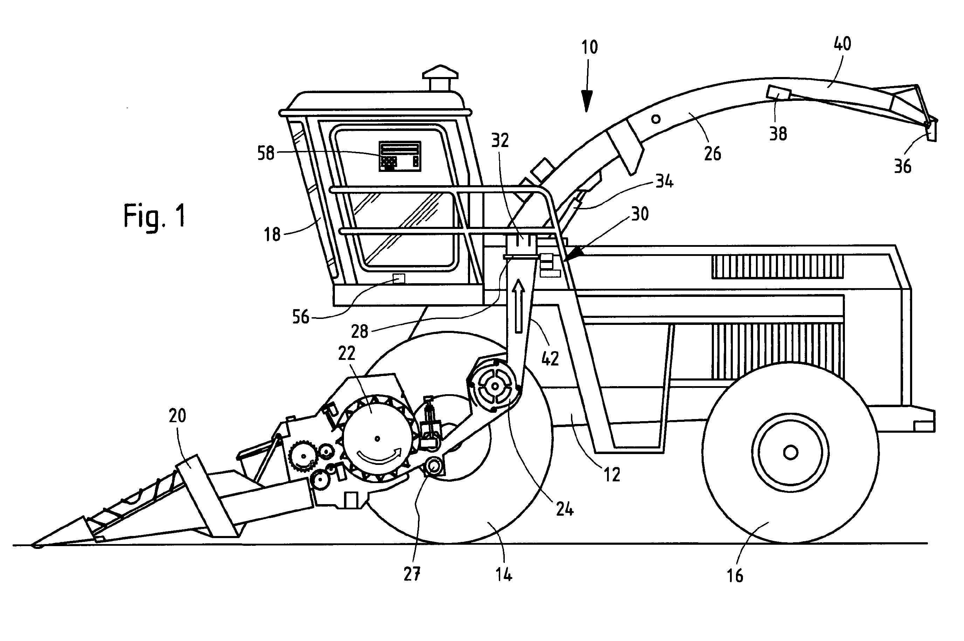

Eine in der Figur 1 gezeigte Arbeitsmaschine 10 in der Art eines selbst fahrenden Feldhäckslers baut sich auf einem Rahmen 12 auf, der von vorderen und rückwärtigen Rädern 14 und 16 getragen wird. Die Bedienung der Arbeitsmaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Die Fördervorrichtung 24 fördert das Gut in einen starren, sich etwa vertikal erstreckenden Auswurfturm 42, an den sich eine gegenüber dem Auswurfturm 42 um eine näherungsweise vertikale Achse drehbare Austrageinrichtung 26 in Form eines Auswurfkrümmers anschließt. Das Gut verlässt die die Arbeitsmaschine 10 über die Austrageinrichtung 26 und wird auf ein nebenher fahrendes Transportfahrzeug geworfen. Zwischen der Häckseltrommel 22 und der Fördervorrichtung 24 erstreckt sich eine in den Gutstrom einfügbare und daraus herausnehmbare Nachzerkleinerungsvorrichtung 27, durch die das zu fördernde Gut der Fördervorrichtung 24 tangential zugeführt wird.

Die Position der Austrageinrichtung 26 kann durch drei Aktoren 30, 34, 38 verändert werden. Ein erster Aktor 30 dient zur Drehung der an einem Drehkranz 28 um eine vertikale Achse drehbar gelagerten Austrageinrichtung 26. Der Aktor 30 ermöglicht somit, die Austrageinrichtung 26 nach hinten in die in Figur 1 dargestellte Transportposition zu drehen, oder sie links oder rechts neben die Arbeitsmaschine 10 zu verbringen. Ein zweiter Aktor 34 in Form eines Hydraulikzylinders ist eingerichtet, die Austrageinrichtung 26 um eine an ihrem stromauf liegenden Ende liegende, horizontale Achse 32 zu verschwenken. Der zweite Aktor 34 definiert somit die Höhe des stromab liegenden Endes der Austrageinrichtung 26. Ein dritter Aktor 38 in Form eines Hydraulikzylinders dient zur Verschwenkung einer Auswurfklappe 36 am stromab liegenden Ende 40 der Austrageinrichtung 26. Die verstellbare Auswurfklappe 36 ermöglicht, den Winkel einzustellen, unter dem das geerntete Gut die Austrageinrichtung 26 verlässt. Eine mit den Aktoren 30, 34, 38 verbundene Steuerung 56 empfängt auch Signale von Sensoren (nicht eingezeichnet) zur Bestimmung der jeweiligen Position der Austrageinrichtung 26 entlang der Bewegungsrichtung der Aktoren 30, 34, 38.

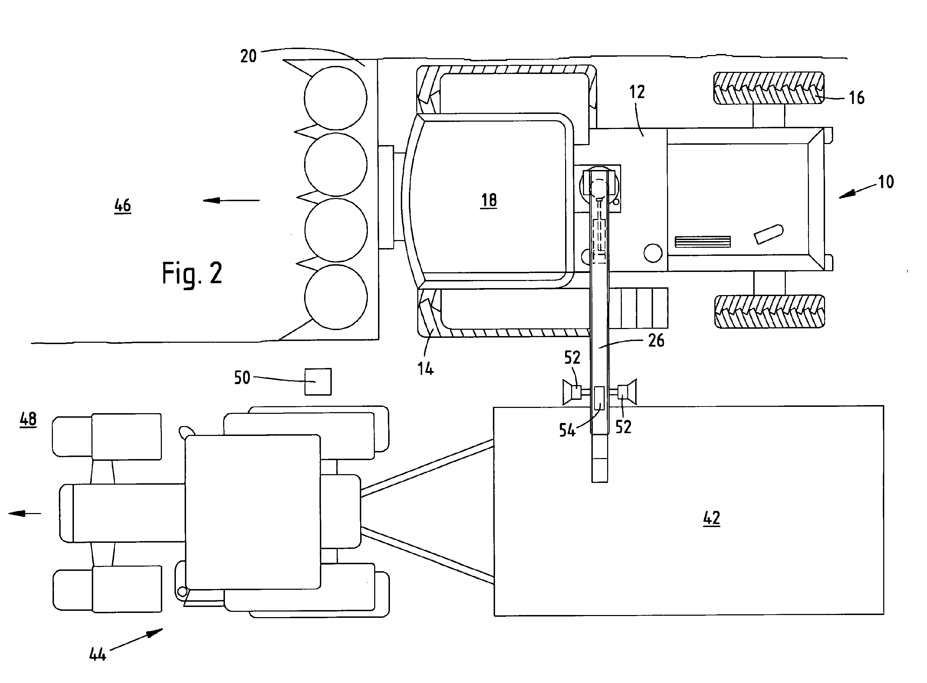

Die Figur 2 zeigt die selbst fahrende Arbeitsmaschine 10, wie sie neben einem Transportfahrzeug 42 herfährt, das von einem Traktor 44 gezogen wird. Die Erntegutaufnahmevorrichtung 20 nimmt Erntegut (hier: Maispflanzen) aus dem vor der Arbeitsmaschine 10 stehenden Bestand 46 auf, während der Traktor 44 auf dem bereits abgeernteten Teil 48 des Felds fährt. Mit dem Bezugszeichen 50 ist ein auf dem Feld stehendes Hindernis in Form eines Leitungsmasts gekennzeichnet.

In der Ausführungsform gemäß Figur 2 sind an der Austrageinrichtung 26 zwei Kollisionssensoren 52 angeordnet, von denen einer an der in Fahrtrichtung vorlaufenden Seite und einer an der in Fahrtrichtung nachlaufenden Seite der Austrageinrichtung 26 angebracht sind. Die Kollisionssensoren 52 sind als Videokameras realisiert, die mit einem Bildverarbeitungssystem 54 verbunden sind. Das Bildverarbeitungssystem 54 verarbeitet jeweils das (in analoger oder digitaler Form vorliegende) Videosignal des Kollisionssensors 52, der sich in der jeweiligen Fahrtrichtung der Arbeitsmaschine 10 an der vorlaufenden Seite der Austrageinrichtung 26 befindet, d. h. in der Figur 2 das Videosignal des links eingezeichneten Kollisionssensors 52. Das Bildverarbeitungssystem 54 wird somit mit Informationen über die Fahrtrichtung der Arbeitsmaschine 10 (Vorwärts- oder Rückwärtsrichtung) und über die jeweilige Stellung der Austrageinrichtung 26 beaufschlagt, die durch den Aktor 30 aus der in Figur 1 dargestellten Transportposition um mindestens 90° in beide Drehrichtungen um die Hochachse drehbar ist.

Erkennt das Bildverarbeitungssystem 54 das Hindernis 50, wird an eine Steuerung 56 (s. Figur 1), welche in dieser Ausführungsform in der Kabine 18 angeordnet ist, ein Signal abgegeben, das auf eine bevorstehende Kollision der Austrageinrichtung 26 mit dem Hindernis 50 hinweist. Die Steuerung 56 gibt dann selbsttätig über eine Bedienerinformationseinrichtung 58 eine optische und akustische Warnung an den Bediener, unterbricht den Antriebsstrang der Räder 14, 16, aktiviert Bremsen für die Räder 14, 16 und veranlasst den Aktor 30, die Austrageinrichtung 26 in die in der Figur 1 dargestellte Transportposition zu verbringen.

Die Steuerung 56 könnte stattdessen auch den Antriebsstrang zwischen dem Aktor 30 und der Austrageinrichtung 26 unterbrechen, indem eine ansonsten geschlossene Kupplung ausgerückt wird, so dass letztere frei drehen kann, wenn sie das Hindernis berührt. Vorzugsweise wird der Antriebsstrang spätestens dann selbsttätig wieder geschlossen, wenn die Austrageinrichtung 26 eine Sollposition, z. B. die in der Figur 1 dargestellte Transportposition erreicht hat, um sie dort anzuhalten und ein Überschwingen auf die andere (hier: rechte) Seite der Arbeitsmaschine 10 und das damit verbundene Gefahrenpotenzial zu vermeiden. Die Steuerung 56 verwendet dazu die Signale von dem oben erwähnten Sensor zur Erfassung der Position der Austrageinrichtung 26 um die Hochachse.

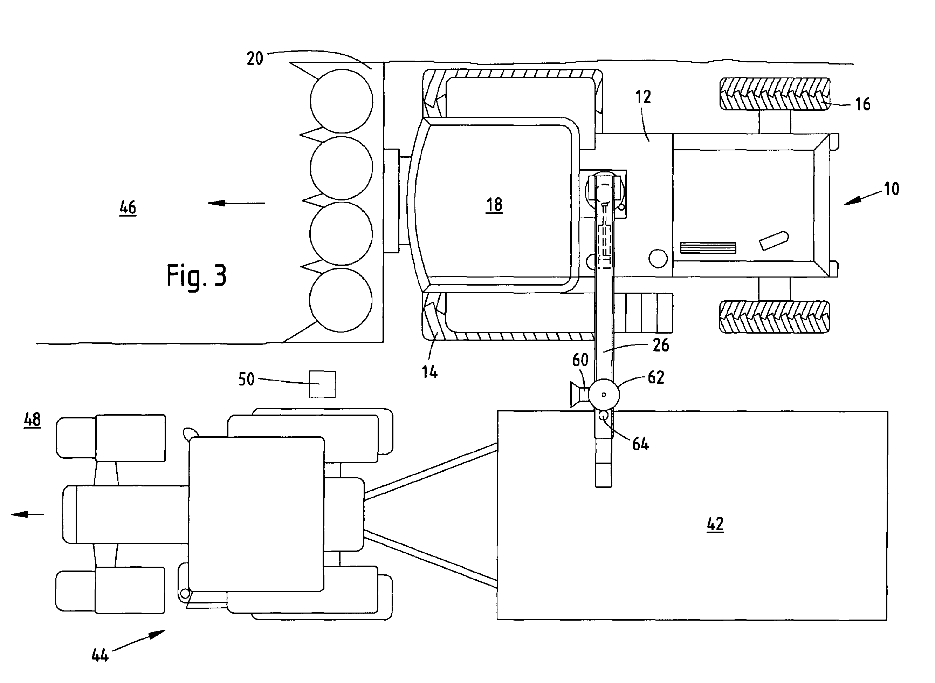

In der Figur 3 ist eine Draufsicht auf eine Arbeitsmaschine mit einer zweiten Ausführungsform eines Kollisionssensors 60 dargestellt. Mit der ersten Ausführungsform übereinstimmende Elemente werden mit denselben Bezugszeichen gekennzeichnet. Der wesentliche Unterschied zur ersten Ausführungsform liegt darin, dass der Kollisionssensor 60 ein den vor ihm liegenden Bereich kontinuierlich in vertikaler und horizontaler Richtung abtastender Laser-Entfernungssensor ist, dessen Ausgang direkt mit der Steuerung 56 (s. Figur 1) verbunden ist.

Der Kollisionssensor 60 ist auf einem Drehteller 62 befestigt, welcher durch einen zugeordneten Antrieb 64 stets selbsttätig in eine Position gebracht wird, in der der sensitive Bereich des Kollisionssensors 60 in Fahrtrichtung nach vorn orientiert ist. Der Antrieb 64 wird somit mit Informationen über die Fahrtrichtung der Arbeitsmaschine 10 (Vorwärts- oder Rückwärtsrichtung) und über die jeweilige Stellung der Austrageinrichtung 26 beaufschlagt. Ein derartiger Drehteller 62, der auch eine selbsttätige horizontale Ausrichtung des Kollisionssensors 60 realisieren könnte, wäre auch zur Anbringung einer der Kollisionssensoren 52 der ersten Ausführungsform geeignet. Der zweite Kollisionssensor 52 aus der Figur 2 kann dann entfallen. Die Kollisionssensoren 52 bzw. 60 könnten auch in, an oder auf der Fahrerkabine 18 befestigt werden, und mit einem Drehteller 42 und/oder mit einem hinreichend großen Sehfeld versehen werden, das nur in dem Bereich, indem sich die Austrageinrichtung 26 tatsächlich befindet, ausgewertet wird.

Sobald der Kollisionssensor 60 einen Gegenstand erfasst, dessen Entfernung vom Kollisionssensor 60 geringer als ein - vorzugsweise zur Anpassung an den von der Geschwindigkeit abhängigen Bremsweg von der Fahrgeschwindigkeit der Arbeitsmaschine 10 abhängiger, insbesondere nach einer quadratischen Gleichung mit der Fahrgeschwindigkeit wachsender - Schwellenwert ist, im dargestellten Beispiel das Hindernis 50, gibt er ein Signal an die Steuerung 56 ab, das auf eine bevorstehende Kollision der Austrageinrichtung 26 mit einem Hindernis hinweist. Die Steuerung 56 reagiert darauf wie oben anhand der ersten Ausführungsform beschrieben.

Durch die vorliegende Erfindung wird selbsttätig eine Kollision der Austrageinrichtung 26 mit dem Hindernis 50 vermieden oder ihre Folgen zumindest abgeschwächt.

## Patentansprüche

1. Selbstfahrende landwirtschaftliche Erntemaschine (10) mit einer Austrageinrichtung (26) zum Überladen von Erntegut von der Erntemaschine auf ein Transportfahrzeug, wobei an der Austrageinrichtung (26) oder in, an oder auf einer Kabine (18) der Erntemaschine (10) ein Kollisionssensor (52, 60) angebracht ist, die Austrageinrichtung (26) einen Antrieb (30, 34) aufweist, welcher betreibbar ist, die Austrageinrichtung (26) um eine vertikale Achse zu verschwenken und der Kollisionssensor (52, 60) eine mit einem Bildverarbeitungssystem (54) verbundene Kamera oder einen den vor ihm liegenden Bereich kontinuierlich in vertikaler und horizontaler Richtung abtastenden Laser-Entfernungssensor umfasst und mit einer Steuerung (56) verbunden ist, die eingerichtet ist, bei Empfang eines Signals des Kollisionssensors (52, 60), das auf eine bevorstehende Kollision der Austrageinrichtung (26) mit einem Hindernis (50) hinweist, den Antrieb (30, 34) zu veranlassen, die Austrageinrichtung (26) vom Hindernis (50) fort zu drehen und/oder eine Notbremsung der Arbeitsmaschine (10) zu veranlassen und/oder die Austrageinrichtung (26) vom Antrieb (30, 34) zu trennen, **dadurch gekennzeichnet, dass** der Kollisionssensor (52, 60) zur Erkennung von in der jeweiligen Fahrtrichtung der Arbeitsmaschine (10) vor der Austrageinrichtung (26) liegenden Hindernissen (50) eingerichtet ist.

## Claims

1. Self-propelling agricultural harvester (10) with a discharging device (26) for transferring crop from the harvester to a transport vehicle, wherein a collision sensor (52, 60) is attached to the discharging device (26) or in, at or on a cab (18) of the harvester (10), the discharging device (26) has a drive (30, 34) which can be operated in order to pivot the discharging device (26) about a vertical axis, and the collision sensor (52, 60) comprises a camera connected to an image-processing system (54), or a laser distance sensor continuously scanning the region located in front thereof in the vertical and horizontal direction, and is connected to a controller (56) which is set up so as, upon receipt of a signal from the collision sensor (52, 60) indicating an imminent collision of the discharging device (26) with an obstacle (50), to cause the drive (30, 34) to rotate the discharging device (26) away from the obstacle (50) and/or to cause emergency braking of the work machine (10) and/or to separate the discharging device (26) from the drive (30, 34), **characterized in that** the collision sensor (52, 60) is set up to detect obstacles (50) located in front of the discharging device (26) in the particular direction of travel of the work machine (10).

## Revendications

1. Moissonneuse agricole automotrice (10) avec un dispositif de déchargement (26) pour transférer un produit récolté de la moissonneuse à un véhicule de transport, un capteur de collision (52, 60) étant monté sur le dispositif de déchargement (26) ou dans, contre ou sur une cabine (18) de la moissonneuse (10), le dispositif de déchargement (26) présentant un entraînement (30, 34), qui peut être entraîné pour faire pivoter le dispositif de déchargement (26) autour d'un axe vertical, et le capteur de collision (52, 60) comprenant une caméra associée à un système de traitement d'image (54) ou un capteur de distance laser balayant la zone située devant lui en continu dans une direction verticale et horizontale, et étant connecté à une commande (56), qui est prévue, à la réception d'un signal du capteur de collision (52, 60), qui indique une collision imminente du dispositif de déchargement (26) avec un obstacle (50), pour amener l'entraînement (30, 34) à détourner le dispositif de déchargement (26) de l'obstacle (50) et/ou pour provoquer un freinage d'urgence de la machine de travail (10) et/ou pour séparer le dispositif de déchargement (26) de l'entraînement (30, 34), **caractérisée en ce que** le capteur de collision (52, 60) est prévu pour reconnaître des obstacles (50) se trouvant devant le dispositif de chargement (26) dans la direction de conduite respective de la machine de travail (10).
